# EUROPÄISCHE PATENTSCHRIFT

(11) **EP 3 569 369 B1**
(45) Veröffentlichungstag und Bekanntmachung des Hinweises auf die Patenterteilung: **02.12.2020**
(21) Anmeldenummer: 19169522.0
(22) Anmeldetag: 16.04.2019
(51) Int. Cl.: B25J 15/04, B25J 15/06

(54) **HALTEVORRICHTUNG FÜR EINEN SAUGGREIFER BEI EINER UNTERDRUCKHANDHABUNGSEINRICHTUNG**
HOLDING DEVICE FOR A SUCTION GRIPPER IN A VACUUM HANDLING DEVICE
DISPOSITIF DE MAINTIEN POUR UNE PINCE ASPIRANTE DANS UN DISPOSITIF DE MANIPULATION SOUS VIDE

(30) Priorität: 14.05.2018 DE 102018111487
(43) Veröffentlichungstag der Anmeldung: 20.11.2019
(73) Patentinhaber: J. Schmalz GmbH, 72293 Glatten (DE)
(72) Erfinder: Harter, Leonhard, 72290 Loßburg (DE)
(74) Vertreter: DREISS Patentanwälte PartG mbB

(56) Entgegenhaltungen:
- US-B1- 6 182 491
- US-B2- 8 132 312
- Buind and Fronius: "Welding with Universal Robots, Smartshift and Fronius", YouTube, 12. März 2018 (2018-03-12), Seiten 1-2, XP054979685, Gefunden im Internet: URL:https://www.youtube.com/watch?v=FcEgNn 5ztyk [gefunden am 2019-09-12]

## Beschreibung

Die Erfindung betrifft eine Haltevorrichtung für einen Sauggreifer an einer Basis einer Unterdruckhandhabungseinrichtung, wobei der Sauggreifer zum Ansaugen eines Gegenstands an der Unterdruckhandhabungseinrichtung vorgesehen ist, wobei die Haltevorrichtung zum lösbaren und vorzugsweise werkzeuglosen Anbringen des Sauggreifers an der Basis ausgebildet ist und eine erste Richtung und eine hierzu orthogonale zweite Richtung aufweist, wobei die Haltevorrichtung einen basisseitigen Teil und einen sauggreiferseitigen Teil umfasst.

Unterdruckhandhabungseinrichtungen sind Vorrichtungen, mittels derer Lasten mit Hilfe von Unterdruck angesaugt und dadurch gegriffen, fixiert oder angehoben und gegebenenfalls verlagert und wieder abgesetzt werden können. Eine hierfür erforderliche Hubkraft kann in an sich beliebiger Weise durch an sich beliebige Hubeinrichtungen bereitgestellt werden.

Bei einer hier in Rede stehenden Unterdruckhandhabungseinrichtung können typischerweise verschiedene Sauggreifer mittels der erwähnten Haltevorrichtung lösbar angebracht werden. Insbesondere besteht die Möglichkeit, verschlissene Sauggreifer gegen neue auszutauschen.

Wenn vorliegend von Sauggreifern die Rede ist, so werden hierunter beispielsweise teller-, tassen- oder glockenförmige, vorzugsweise aus einem zwar noch formstabilen jedoch biegsam nachgiebig verformbaren Material verstanden, die sich dann auch an Gegenstände mit gekrümmter Außenkontur, wie mit Schüttgütern befüllte Säcke, ohne weiteres anpassen können und solche Gegenstände ansaugen können. Es sind jedoch auch Anwendungen denkbar, die mit tatsächlich starren Sauggreifern, wiederum vorzugsweise in Teller-, Tassen- oder Glockenform, bewerkstelligt werden können. Es wird also unter dem Begriff "Sauggreifer" derjenige Teil oder Bereich der Unterdruckhandhabungseinrichtung verstanden, welcher an einen anzusaugenden Gegenstand aufgesetzt und durch Beaufschlagung des Sauggreifers mit Unterdruck an den Gegenstand angesaugt wird, so dass dieser fixiert und gegebenenfalls angehoben und verlagert werden kann.

Nach US 6,713,521 B1 ist eine Haltevorrichtung derart ausgebildet, dass ein Sauggreifer mit einem von einer Kreisform abweichenden Flansch in einer ersten axialen Richtung in einen basisseitigen Teil der Haltevorrichtung eingesetzt und dann um die erste Richtung in eine bajonettartig fixierende bestimmungsgemäße Montageposition verdreht wird.

Ähnliches zeigt US 8,132,312 B2, wobei hier ein Flansch des Sauggreifers kreisringförmig ausgebildet ist und durch Verdrehung eines den Flansch hintergreifenden Rings in der Montageposition gehalten wird.

Unter dem Titel "Welding with Universal Robots, Smartshift and Fronius" ist eine als Roboterarm ausgeführte Haltevorrichtung veröffentlicht, abrufbar unter https://www.youtube.com/watch?v=FcEgNn5ztyk.

Der vorliegenden Erfindung liegt die Aufgabe zugrunde, die Anbringung und Ablösung eines Sauggreifers, insbesondere zu Austauschzwecken, bei einer Unterdruckhandhabungseinrichtung auf noch bedienungsfreundlichere Weise zu ermöglichen, wobei die Haltevorrichtung dennoch auf wirtschaftliche Weise herstellbar sein soll.

Diese Aufgabe wird durch eine Haltevorrichtung mit den Merkmalen des Anspruchs 1 gelöst. Die Haltevorrichtung dient zum Halten eines Sauggreifers oder eines sonstigen Schnittstellenorgans an einer Basis einer Unterdruckhandhabungseinrichtung, also zur Ausbildung einer lösbaren Montageverbindung. Bei derartigen Unterdruckhandhabungsvorrichtung ist der Sauggreifer in der Regel zum Ansaugen eines Gegenstands vorgesehen. Es ist daher erwünscht, den Sauggreifer auswechseln zu können. Die Haltevorrichtung wird vorliegend derart ausgebildet, dass eine Anbringung des Sauggreifers sowohl durch eine lineare Aufschiebebewegung in der zweiten Richtung als auch alternativ durch Einsetzen in der hierzu orthogonalen ersten Richtung und anschließendes Verdrehen in die Montagestellung möglich ist. Bei der ersten Richtung handelt es sich vorzugsweise um die Aufsetzrichtung des Sauggreifers auf den anzusaugenden Gegenstand, die üblicherweise im Betrieb vertikal verläuft, was aber keinesfalls zwingend ist. Häufig ist der Sauggreifer auch rotationssymmetrisch ausgebildet, so dass diese Art des Montierens des Sauggreifers als vom Benutzer komfortabel empfunden wird. Das Einsetzen in der ersten Richtung und anschließende Verdrehen um die erste Richtung wird z.B. bei größer bauenden Sauggreifern als einfacher ausführbar empfunden. Auf der anderen Seite zeigte es sich, dass z.B. bei kleiner bauenden Sauggreifern das lineare Ein- bzw. Aufschieben als angenehmer empfunden werden kann. Erfindungsgemäß erweist es sich jedenfalls als vorteilhaft, dass es dem Benutzer überlassen bleibt, auf welche der beiden Art und Weisen er den Sauggreifer in seine bestimmungsgemäße Montageposition verbringt oder in umgekehrter Richtung aus seiner bestimmungsgemäßen Montageposition löst und von dem basisseitigen Teil der Haltevorrichtung abnimmt. Die eine oder die andere Wahl der Montage oder Demontage kann durch die Gesamtausbildung der Unterdruckhandhabungseinrichtung und deren Gewicht und Anordnung und Zugänglichkeit beeinflusst sein. So gibt es Unterdruckhandhabungseinrichtungen mit einer Vielzahl von insbesondere array-artig angeordneten Sauggreifern, die dann eher kleiner bauen, oder solche mit wenigen oder nur mit einem einzigen sehr ausladenden Sauggreifer. Durch die Erfindung ist es dem Anwender überlassen, auf die ihm individuell angenehmste Art einen Sauggreifer zu montieren oder zu demontieren.

Der Gleitschuh als Komponente des sauggreiferseitigen Teils der Haltevorrichtung ist derart ausgebildet, dass er durch die Schiebesitzaufnahme beim linearen Aufschieben hintergriffen werden kann. Er kann von einem Strebenwerk gebildet sein, welches in der Schiebeebene erstreckt ist. Es erweist sich aber auch als vorteilhaft, wenn der Gleitschuh plattenförmig ausgebildet ist. Er kann in Draufsicht in der ersten Richtung betrachtet rundlich, oval oder aber polygonal, insbesondere quadratisch, rechteckig, sechseckig ausgebildet sein. In jedem Fall ist der Gleitschuh so ausgebildet und am Sauggreifer angeordnet, dass er durch die Schiebesitzaufnahme formschlüssig umgriffen werden kann.

In Weiterbildung der Erfindung wird vorgeschlagen, dass der Gleitschuh in der Schiebeebene eine erste Abmessung (A1) und eine zweite Abmessung (A2) schräg zur ersten Abmessung (A1) aufweist, die voneinander verschieden sind. Bei einer Ausführungsform der Erfindung wird vorgeschlagen, dass die erste Abmessung (A1) des Gleitschuhs größer ist als die zweite Abmessung (A2) schräg zur ersten Abmessung und dass der Gleitschuh orthogonal zu seiner zweiten Abmessung (A2) in der Schieberichtung bis zu seiner bestimmungsgemäßen Montageposition linear in die Schiebesitzaufnahme einschiebbar ist. Es wird also vorgeschlagen, dass die Schiebesitzaufnahme und der Gleitschuh so ausgebildet sind, dass der Gleitschuh mit seiner zweiten kleineren Abmessung (A2) in der Schiebesitzaufnahme gehalten ist.

Die den Gleitschuh umgreifenden und formschlüssig hintergreifenden Bereiche brauchen die Einstecköffnung keinesfalls bis auf eine Schiebeöffnung nahezu vollständig umschließen; es ist völlig hinreichend, wenn die Einsetzöffnung von nur zwei einander gegenüberliegenden Seiten her begrenzt wird, so wie dies der Fall ist, wenn die den Gleitschuh hintergreifenden Bereiche von zwei gegenüberliegenden Streben oder Leisten gebildet sind, die im Schnitt und in Schieberichtung betrachtet beispielsweise L-förmig sind, wie bei einer Schalbenschanzführung. Es wird eine Ausführungsform von besonderer Bedeutung vorgeschlagen, die dadurch gekennzeichnet ist, dass bei den den Gleitschuh umgreifenden und formschlüssig hintergreifenden Bereichen wenigstens eine und vorzugsweise zwei gegenüberliegende randoffene Freischneidungen ausgebildet ist bzw. sind, die sich in der Schiebeebene erstrecken und in der ersten Richtung durch den jeweiligen hintergreifenden Bereich durchgehend ausgebildet sind und die Einstecköffnung derart begrenzen und definieren, dass der Gleitschuh außerhalb der Schiebesitzaufnahme positionierbar und derart orientierbar ist, dass er von dort mit seiner größeren der zwei Abmessungen beim Einsetzen durch die Einstecköffnung hindurch die Freischneidung durchgreift. Nach dieser weiteren Ausgestaltung mit randoffenen Freischneidungen bei den hintergreifenden Bereichen der Schiebesitzaufnahme lässt sich der Gleitschuh mit seiner größeren Abmessung entsprechend der Lage der Freischneidung(en) orientieren und durch die Freischneidung(en) hindurch in die Schiebesitzaufnahme einsetzen und dann derart verdrehen, so dass er in der Schiebesitzaufnahme hintergriffen wird, damit der Gleitschuh und damit der Sauggreifer betriebssicher gehalten ist.

Wie schon angedeutet, erweist es sich als vorteilhaft, wenn die Schiebesitzaufnahme schwalbenschwanzförmig ausgebildet ist.

Weiter erweist es sich als vorteilhaft, wenn der Sauggreifer an den sauggreiferseitigen Teil der Haltevorrichtung angespritzt ist oder auf den sauggreiferseitigen Teil der Haltevorrichtung aufgeklipst ist oder mit dem sauggreiferseitigen Teil der Haltevorrichtung verschraubt ist. Weiter erweist es sich als vorteilhaft, wenn der saugreiferseitige Teil der Haltevorrichtung aus dem Gleitschuh und aus einem hiervon in Richtung auf den Sauggreifer vorstehenden Ansatz gebildet ist. Der genannte Ansatz kann dabei nippelförmig, rohrförmig, schellenförmig oder flanschförmig sein und in an sich beliebiger Weise mit dem Sauggreifer verbunden oder verbindbar sein.

Es erweist sich weiter als vorteilhaft, wenn der saugreiferseitige Teil der Haltevorrichtung in der Schieberichtung betrachtet T-förmig oder pilzförmig ist, so dass der querliegende Bereich der T-Form einen umgreifbaren oder hintergreifbaren Randbereich bildet.

Es wäre denkbar, dass die Unterdruckkommunikation zwischen einer Unterdruckversorgung der Unterdruckhandhabungseinrichtung und dem Sauggreifer durch an sich beliebige weitere Leitungsmittel realisiert wird. Demgegenüber wird weiter vorgeschlagen, dass der Gleitschuh und der basisseitige Teil der Haltevorrichtung eine jeweilige vorzugsweise in der ersten Richtung erstreckte Strömungsöffnung zur Strömungs- und Unterdruckkommunikation mit der Unterdruckhandhabungseinrichtung. Auf diese Weise erfolgt die Unterdruckkommunikation zwischen dem Sauggreifer und der Unterdruckhandhabungseinrichtung über die Haltevorrichtung bzw. durch die Haltevorrichtung hindurch.

Der basisseitige Teil der Haltevorrichtung weist bevorzugtermaßen einen die Schiebesitzaufnahme bildenden Gehäusekörper auf.

Wenn der Sauggreifer in seine bestimmungsgemäße Montageposition gebracht ist, so wäre es wünschenswert, dass er sich hieraus nicht wieder unbeabsichtigt löst. Hierfür könnten die Schiebesitzaufnahme und der mit ihr zusammenwirkende Gleitschuh in geeigneter Weise, insbesondere einen Klemmschluss bildend, zusammenwirken. Es erweist sich aber auch als vorteilhaft, dass der basisseitige Teil der Haltevorrichtung oder der Gleitschuh eine schnappende, rastende oder in sonstiger Weise hintergreifende Verriegelungsvorrichtung aufweist, mittels derer der Gleitschuh in seiner bestimmungsgemäßen Montageposition in der Schiebesitzaufnahme gesichert werden kann.

Hierfür kann es sich als vorteilhaft erweisen, wenn die Verriegelungsvorrichtung einen in eine Verriegelungsposition federvorgespannten manuell betätigbaren Stößel aufweist. Um den Gleitschuh in seine Montagestellung zu bringen, könnte die Verriegelungsvorrichtung derart ausgebildet sein, dass ein Benutzer den federvorgespannten Stößel oder ein anderes federvorgespanntes Organ entgegen der Federvorspannung betätigt, so dass die Verriegelungsvorrichtung gelöst und der Gleitschuh in seine Montageposition gebracht werden kann oder umgekehrt aus seiner Montageposition gelöst werden kann.

Hierfür erweist es sich nach einer Ausführungsform weiter als vorteilhaft, wenn die Verriegelungsvorrichtung einen zwischen einer Freigabeposition und einer Verriegelungsposition bewegbaren, vorzugsweise kugelförmigen Sperrkörper aufweist.

Nach einer Ausführungsform erweist es sich als vorteilhaft, wenn der Sperrkörper in der ersten Richtung in die Schiebesitzaufnahme eingreifen kann. Auf diese Weise blockiert der Sperrkörper den Gleitschuh dahingehend, dass er einerseits nicht aus der Schiebesitzaufnahme entgegen der Aufschieberichtung herausgezogen werden kann und andererseits an einer Rückdrehung gehindert wird und nicht unbeabsichtigt entgegen der ersten Richtung aus der Einstecköffnung abgelöst werden kann.

Nach einer weiteren Ausführungsform wird vorgeschlagen, dass der federvorgespannte manuell betätigbare Stößel vorzugsweise parallel zu der Schiebeebene stellbar ist und dabei mit seinem Außenumfang auf eine Position des Sperrkörpers einwirkt oder diese vorgibt oder begrenzt. Der Außenumfang des Stößels wirkt also gewissermaßen als Nockenbahn für den Sperrkörper.

Nach einer weiteren Ausführungsform wird vorgeschlagen, dass die Verriegelungsvorrichtung ausgebildet ist, indem ein Gehäusekörper des basisseitigen Teils der Haltevorrichtung eine durch einen Einsatz einseitig verschlossene Durchgangsöffnung oder eine Sacklochöffnung aufweist, in die ein Federelement und ein Stößel eingesetzt ist, wobei der Stößel nach außerhalb des Gehäusekörpers vorragt und dort manuell betätigbar ist und wobei der Stößel selbst oder ein durch den Stößel betätigbarer Verriegelungskörper in die Schiebesitzaufnahme einrückbar ist, um den Gleitschuh in seiner bestimmungsgemäßen Montageposition in der Schiebesitzaufnahme zu sichern. Auf diese Weise lässt sich die Verriegelungsvorrichtung mit wenigen Teilen und verhältnismäßig geringem Fertigungsaufwand herstellen. Neben der Durchgangsöffnung oder Sacklochöffnung muss lediglich noch eine Queröffnung zu der Schiebesitzaufnahme hin gefertigt werden, durch welche der vorzugsweise kugelförmige Sperrkörper in die Schiebesitzaufnahme eingreift.

Der basisseitige Teil der Haltevorrichtung kann bei einer Unterdruckhandhabungseinrichtung in an sich beliebiger Weise an die Basis der Einrichtung anbringbar sein, also durch an sich beliebige Montageverbindungen. Es kann sich als vorteilhaft erweisen, wenn der basisseitige Teil der Haltevorrichtung einen Gehäusekörper mit einem unterdruckkommunizierenden Anschluss an die Basis der Unterdruckhandhabungseinrichtung aufweist.

Weiter ist Gegenstand der vorliegenden Erfindung eine Unterdruckhandhabungseinrichtung nach den Ansprüchen 18 - 20. Es sei an dieser Stelle ausdrücklich darauf hingewiesen, dass sich die vorbeschriebene Haltevorrichtung nicht nur für die lösbare Anbringung von Sauggreifern eignet, sondern auch für die lösbare Anbringung von weiteren bei Unterdruckhandhabungseinrichtungen zum Einsatz kommenden Schnittstellenorganen, wie insbesondere Tastern, Federstößeln oder Sensoren. Auch für derartige Haltevorrichtungen wird selbständiger Schutz in Anspruch genommen, wobei dann der sauggreiferseitige Teil der Haltevorrichtung ein schnittstellenorganseitiger Teil der Haltevorrichtung ist.

Weitere Einzelheiten, Merkmale und Vorteile der Erfindung ergeben sich aus den beigefügten Patentansprüchen und aus der zeichnerischen Darstellung und nachfolgenden Beschreibung einer bevorzugten Ausführungsform der Erfindung.

In der Zeichnung zeigt:
- Figur 1: eine schematische Darstellung einer Unterdruckhandhabungseinrichtung;
- Figur 2a: eine Seitenansicht eines Sauggreifers für eine Unterdruckhandhabungseinrichtung beispielsweise nach Figur 1 und einer erfindungsgemäßen Haltevorrichtung;
- Figur 2b: eine Schnittansicht durch die erfindungsgemäße Haltevorrichtung (ohne Sauggreifer mit Schnittebene A-A in Figur 3c);
- Figuren 3a, b: eine Ansicht von unten auf die erfindungsgemäße Haltevorrichtung zur Verdeutlichung des Aufschiebens des Gleitschuhs;
- Figuren 3c, d: eine Seitenansicht der Haltevorrichtung nach Figuren 3a, 3b;
- Figuren 4a, b, c: Ansichten von unten auf die erfindungsgemäße Haltevorrichtung zur Verdeutlichung des Einsetzens und anschließenden Eindrehens des Gleitschuhs; und
- Figuren 4d, e, f: Seitenansichten der Figuren 4a, b, c.

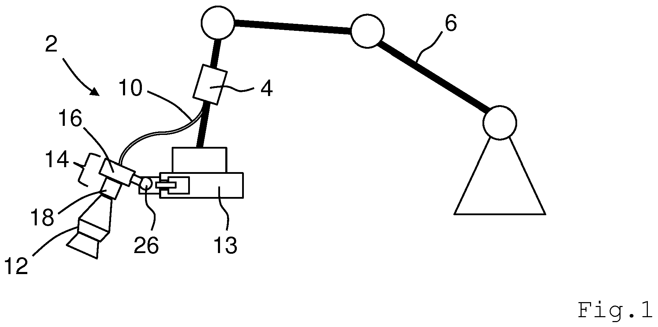

Figur 1 zeigt in schematischer Darstellung eine Unterdruckhandhabungseinrichtung 2. Die Unterdruckhandhabungseinrichtung 2 umfasst eine unterdruckerzeugende Einrichtung 4 und eine Tragvorrichtung 6 sowie nicht dargestellte an sich bekannte und daher nicht näher zu beschreibende Ventileinrichtungen und Steuermechanismen zur Steuerung des Unterdrucks an einem oder mehreren Sauggreifern 12 zum Ansaugen von Gegenständen, um diese mittels der Unterdruckhandhabungseinrichtung 2 zu fixieren, anzuheben oder zu verlagern. Um Unterdruck von der unterdruckerzeugenden Einrichtung vier zu dem oder den Sauggreifern 12 zu führen ist eine unterdruckbeaufschlagbare Leitung 10 dargestellt. Die Tragvorrichtung 6 kann beliebig einstellbare Achsen, insbesondere Robotorachsen, aufweisen, was in Figur 1 nur durch Kreise und Linien angedeutet ist. Die Tragvorrichtung 6 hält eine Basis 13 der Unterdruckhandhabungseinrichtung 2, an der einer oder vorzugsweise mehrere Sauggreifer 12 auf noch zu beschreibende Weise lösbar angeordnet sind. Diese Basis 13 kann beispielsweise aus einer Konstruktion aus einem oder mehreren Profilen gebildet sein und insbesondere flächenhaft ausladend gestaltet sein, so dass mehrere Sauggreifer 12 an variablen Stellen entsprechend der Größe des anzusaugenden Gegenstands angeordnet werden können.

Der in Figur 1 dargestellte Sauggreifer 12 ist mittels einer in Figur 1 nur schematisch angedeuteten erfindungsgemäßen Haltevorrichtung 14 an der Basis 13 der Unterdruckhandhabungseinrichtung 2 vorzugsweise werkzeuglos anbringbar und wieder ablösbar, etwa wenn der Sauggreifer 12 verschlissen ist und durch einen neuen ersetzt werden muss.

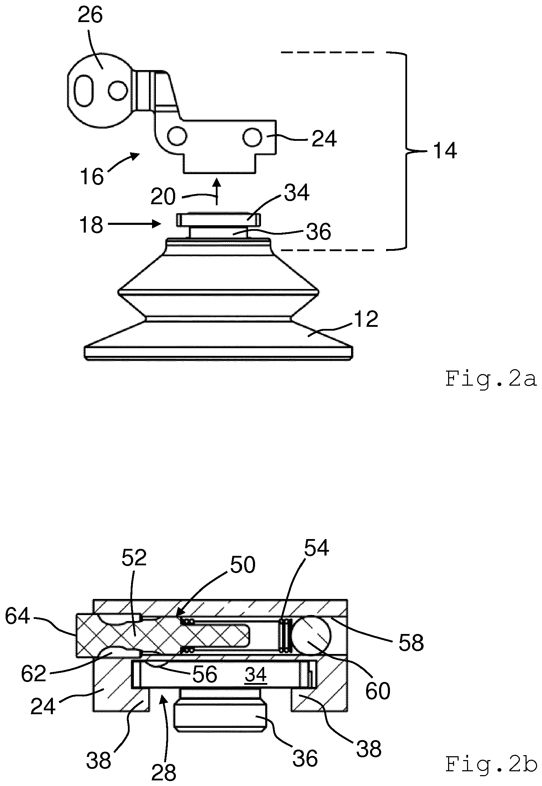

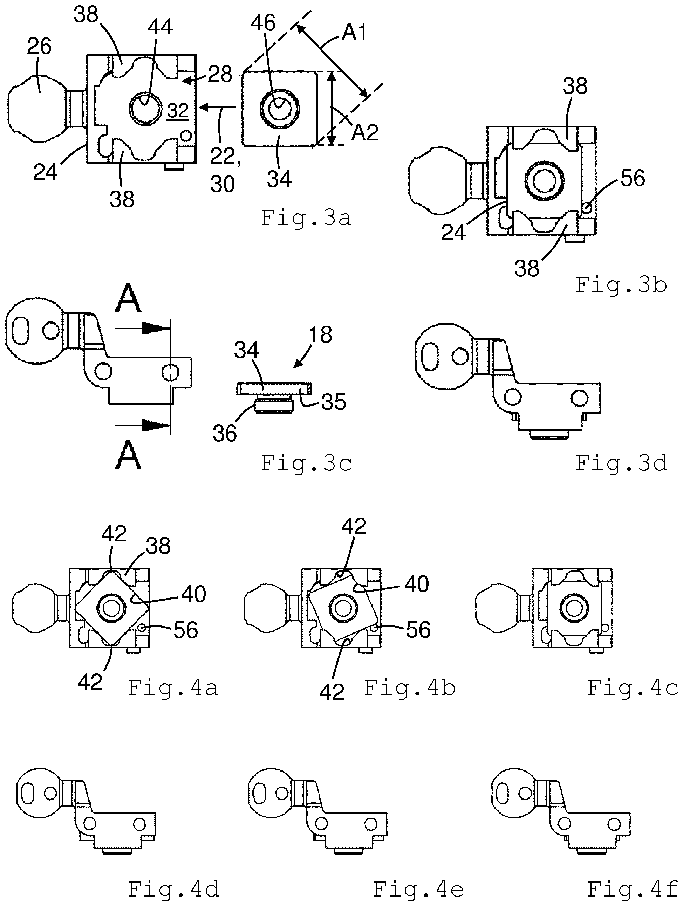

Figur 2a zeigt in einer Seitenansicht den Sauggreifer 12 und die erfindungsgemäße Haltevorrichtung 14. Die Haltevorrichtung 14 umfasst einen basisseitigen Teil 16 und einen sauggreiferseitigen Teil 18. Sie umfasst eine erste Richtung 20 und eine hierzu orthogonale zweite Richtung 22, die orthogonal zur Zeichnungsebene der Figur 2a verläuft, jedoch in Figur 3a angegeben ist.

Der basisseitige Teil 16 umfasst einen Gehäusekörper 24, der beispielhaft einen kugelförmigen Ansatz 26 aufweist, der in einer in Figur 2 nicht dargestellten Kupplungsvorrichtung an der Basis 13 anbringbar ist. Dies ist aber rein beispielhaft. Der basisseitige Teil 16 der Haltevorrichtung 14 kann auch in sonstiger Weise an einer Bedienvorrichtung 10 oder einer Schnittstelle im Bereich des unteren Endes des Hubschlauchs 8 montierbar sein.

Erfindungsgemäß umfasst der basisseitige Teil 16 der Haltevorrichtung 14 eine Schiebesitzaufnahme 28, die aus Figuren 2b und 3a, b ersichtlich ist. Die Schiebesitzaufnahme 28 umfasst eine Schieberichtung 30, die in der zweiten Richtung 22 verläuft. Der sauggreiferseitige Teil 18 der Haltevorrichtung 14 umfasst einen in einer Schiebeebene 32 der Schiebesitzaufnahme 28 anordenbaren und im beispielhaft dargestellten Fall plattenförmigen Gleitschuh 34. Der Gleitschuh 34 ist in Draufsicht in der ersten Richtung 20 betrachtet beispielhaft quadratisch ausgebildet und bildet einen in der ersten Richtung 20 hintergreifbaren Flansch. Sauggreiferseitig weist der Gleitschuh 34 einen in Richtung auf den Sauggreifer vorstehenden beispielhaft rohrförmigen Ansatz 36 auf, gegen den der Sauggreifer 12 nach einer Ausführungsvariante angespritzt ist. Es ist jedoch auch eine Klips- oder Rastverbindung oder eine Schraubschellenverbindung oder dergleichen zwischen dem sauggreiferseitigen Teil 18 und dem Sauggreifer 12 denkbar.

Wie aus Figuren 2b und 3a, b ersichtlich, umfasst die Schiebesitzaufnahme 28 den Gleitschuh 34 umgreifende und formschlüssig in der ersten Richtung 20 hintergreifende Bereiche 38. Zum Aufschieben des sauggreiferseitigen Teils 18 auf die Schiebesitzaufnahme 28 wird der Sauggreifer 12 derart orientiert, dass der Gleitschuh 34 in der zweiten Richtung 22 in die Schiebesitzaufnahme 28 eingeführt werden kann. Figur 3b zeigt den Gleitschuh in seiner bestimmungsgemäßen Montageposition, in der er in der zweiten Richtung 22 gegen einen Endanschlag in der Schiebesitzaufnahme 28 bzw. in dem Gehäusekörper 24 anschlägt. In dieser Position wird der Gleitschuh 34 auf noch zu erläuternde Weise gegen Lösen gesichert.

Die erfindungsgemäße Haltevorrichtung 14 lässt sich aber noch auf eine weitere Weise bedienen, was in Figuren 4a bis f dargestellt ist. Der Gleitschuh 36 weist in der Schiebeebene 32 eine erste Abmessung A1 und eine schräg zur ersten Abmessung A1 erstreckte zweite Abmessung A2 auf (Figur 3a). Die schon erwähnten den Gleitschuh 34 umgreifenden und in der ersten Richtung hintergreifenden Bereiche 38 der Schiebesitzaufnahme 28 begrenzen zwischen sich einen freien Querschnitt, der eine Einstecköffnung 40 für den Gleitschuh 34 bildet, wobei die Einsteckrichtung der ersten Richtung 20 entspricht. Ferner sind bei den den Gleitschuh 34 formschlüssig hintergreifenden Bereichen 38 zwei gegenüberliegende randoffene Freischneidungen 42 ausgebildet, die zu der Einstecköffnung 40 randoffen sind. Die Einstecköffnung 40, die Freischneidungen 42 und die Abmessungen A1 und A2 des Gleitschuhs 34 sind derart, dass der Gleitschuh 34 in der in Figur 4a dargestellten Orientierung, also mit seiner größeren Abmessung A1, durch die Freischneidungen 42 hindurch in der ersten Richtung 20 in die Schiebesitzaufnahme 28 eingesetzt werden kann. Wie in Figuren 4b, c dargestellt, lässt sich der Gleitschuh 34 dann in seine bestimmungsgemäße Montageposition um die erste Richtung 20 verdrehen.

Die erfindungsgemäße Haltevorrichtung 14 gestattet also auf zwei verschiedene Weisen, den Sauggreifer 12 bzw. dessen Gleitschuh 34 in die bestimmungsgemäße in Figuren 3b und 4c dargestellte Montageposition zu bringen bzw. hiervon zu lösen. Der Sauggreifer 12 kann sowohl durch Aufschieben in die Schiebesitzaufnahme 28 als auch durch Einsetzen in der ersten Richtung 20 durch die Einstecköffnung 40 hindurch in die Schiebesitzaufnahme 28 und anschließendes Verdrehen in die bestimmungsgemäße Montageposition gebracht werden.

Bei der dargestellten Ausführungsform der erfindungsgemäßen Haltevorrichtung 14 weist sowohl der basisseitige Teil 16 als auch der saugreiferseitige Teil 18 eine Strömungsöffnung 44 bzw. 46 zur Unterdruckkommunikation zwischen dem Schlauch Innenraum 9 des Hubschlauchs 8 und dem Saugreifer 12 auf.

Bei dem basisseitigen Teil 16 der erfindungsgemäßen Haltevorrichtung 14 ist weiter eine Verriegelungsvorrichtung 50 vorgesehen. Sie umfasst einen federvorgespannten manuell betätigbaren Stößel 52 und dessen Federelement 54 sowie einen kugelförmigen Sperrkörper 56, der je nach Position des Stößels 52 mehr oder weniger weit in der ersten Richtung 20 in die Schiebesitzaufnahme 28 einragen kann. Der in die Schiebesitzaufnahme 28 einragende Sperrkörper 26 ist in Figur 2b, aber auch 3a, b und 4a - c, angedeutet. Wenn er sich in die Schiebesitzaufnahme 28 in der ersten Richtung 20 hineinerstreckt, so verhindert er, dass sich der Gleitschuh 34 wieder entgegen der Schieberichtung 22 aus der Schiebesitzaufnahme 28 herausziehen lässt oder in die in Figuren 3a, b dargestellte Orientierung zurückdrehen lässt. Er ist somit in der Schiebesitzaufnahme in seiner bestimmungsgemäßen Montageposition gesichert, was einen sicheren Betrieb der Unterdruckhandhabungseinrichtung gewährleistet. Die vorstehend genannten Komponenten der Verriegelungsvorrichtung 50 sind angeordnet und ausgebildet, indem der Gehäusekörper 24 des basisseitigen Teils 16 der Haltevorrichtung eine Durchgangsöffnung 58 aufweist, die einseitig durch einen eingepressten beispielhaft kugelförmigen Körper 60 verschlossen ist. Gegen den kugelförmigen Körper 60 stützt sich das Federelement 54 ab. Der Stößel 52 umfasst an seinem Außenumfang eine vorzugsweise rotationssymmetrisch ausgebildete Ausnehmung, die eine Nockenbahn 62 für den Sperrkörper 56 bildet. Der Stößel ragt mit einem manuell betätigbaren Ende 64 aus dieser Durchgangsöffnung 58 heraus und ist in dieser Richtung vorgespannt. An einem weiteren Heraustreten ist er allerdings aufgrund des mit seiner Nockenbahn 62 zusammenwirkenden Sperrkörpers 56 gehindert. Aufgrund der Federvorspannung wird der Sperrkörper 56 in die Verriegelungsstellung vorgespannt, in der er in die Schiebesitzaufnahme 58, wie in Figur 2b dargestellt, einragt. Um den Gleitschuh 34 in seine bestimmungsgemäße Montageposition aufschieben oder wieder lösen zu können bzw. in seine bestimmungsgemäße Montageposition eindrehen und hiervon zurückdrehen zu können, muss durch einen Benutzer der Stößel 52 etwas in die Öffnung 58 eingedrückt werden, damit der Sperrkörper 56 aus der Schiebesitzaufnahme 28 freikommen kann bzw. durch den Gleitschuh verdrängt werden kann. Beim anschließenden Loslassen rastet der Stößel bzw. der Sperrkörper 56 wieder in die Verriegelungsstellung.

## Patentansprüche

1. Haltevorrichtung (14) für einen Sauggreifer (12) oder für ein sonstiges Schnittstellenorgan an einer Basis (13) einer Unterdruckhandhabungseinrichtung (2), wobei die Haltevorrichtung (14) zum lösbaren und vorzugsweise werkzeuglosen Anbringen des Sauggreifers (12) oder des sonstigen Schnittstellenorgans an der Basis (13) ausgebildet ist und eine erste Richtung (20) und eine hierzu orthogonale zweite Richtung (22) aufweist,
wobei die Haltevorrichtung (14) einen basisseitigen Teil (16) und einen sauggreiferseitigen Teil (18) oder einen schnittstellenorganseitigen Teil umfasst, wobei der basisseitige Teil (16) eine Schiebesitzaufnahme (28) für den sauggreiferseitigen Teil (18) oder den schnittstellenorganseitigen Teil umfasst, wobei eine Schiebeebene (32) und eine Schieberichtung (30) definiert sind,
wobei der sauggreiferseitige Teil (18) oder der schnittstellenorganseitige Teil einen in der Schiebeebene (32) der Schiebesitzaufnahme (28) anordenbaren vorzugsweise plattenförmigen Gleitschuh (34) umfasst, der in der Schieberichtung (30) und in einer formschlüssigen Hintergriffsstellung mit der Schiebesitzaufnahme (28) linear in seine bestimmungsgemäße Montageposition an dem basisseitigen Teil (16) aufschiebbar ist,
wobei die Schieberichtung (30) der Schiebesitzaufnahme (28) in der zweiten Richtung (22) verläuft,
wobei die Schiebesitzaufnahme (28) den Gleitschuh (34) umgreifende und formschlüssig hintergreifende Bereiche (38) aufweist, die zusätzlich eine in der ersten Richtung (20) erstreckte Einstecköffnung (40) begrenzen, wobei die Schiebesitzaufnahme (28) und die Einstecköffnung (40) und der Gleitschuh (34) derart ausgebildet sind, dass der Gleitschuh sowohl in der zweiten Richtung (22) in die Schiebesitzaufnahme (28) einschiebbar ist als auch alternativ hierzu in der ersten Richtung (20) durch die Einstecköffnung (40) hindurch in die Schiebesitzaufnahme (28) einsetzbar und dann um die erste Richtung (20) in die Hintergriffsstellung und bestimmungsgemäße Montageposition in der Schiebesitzaufnahme (28) verdrehbar ist.

2. Haltevorrichtung (14) nach Anspruch 1, **dadurch gekennzeichnet, dass** der Gleitschuh (34) plattenförmig ausgebildet ist.

3. Haltevorrichtung (14) nach Anspruch 1 oder 2, **dadurch gekennzeichnet, dass** der Gleitschuh (34) in Draufsicht in der ersten Richtung betrachtet polygonal, insbesondere quadratisch, rechteckig, sechseckig, ausgebildet ist.

4. Haltevorrichtung (14) nach Anspruch 1, 2 oder 3, **dadurch gekennzeichnet, dass** der Gleitschuh (34) in der Schiebeebene (22) eine erste Abmessung (A1) und eine zweite Abmessung (A2) schräg zur ersten Abmessung (A1) aufweist, die voneinander verschieden sind.

5. Haltevorrichtung (14) nach einem oder mehreren der vorstehenden Ansprüche, **dadurch gekennzeichnet, dass** die erste Abmessung (A1) des Gleitschuhs (34) größer ist als die zweite Abmessung (A2) und dass der Gleitschuh orthogonal zu seiner zweiten Abmessung (A2) in der Schieberichtung (30) bis zu seiner bestimmungsgemäßen Montageposition linear in die Schiebesitzaufnahme (28) einschiebbar ist.

6. Haltevorrichtung (14) nach einem oder mehreren der vorstehenden Ansprüche, **dadurch gekennzeichnet, dass** bei den den Gleitschuh (34) formschlüssig hintergreifenden Bereichen (38) wenigstens eine und vorzugsweise zwei gegenüberliegende randoffene Freischneidungen (42) ausgebildet ist bzw. sind, die sich in der Schiebeebene (32) erstrecken und in der ersten Richtung (20) durch den jeweiligen hintergreifenden Bereich (38) durchgehend ausgebildet sind und die Einstecköffnung (40) derart begrenzen und definieren, dass der Gleitschuh außerhalb der Schiebesitzaufnahme (28) positionierbar und derart orientierbar ist, dass er von dort mit seiner größeren (A1) der zwei Abmessungen (A1, A2) beim Einsetzen durch die Einstecköffnung (40) hindurch die Freischneidung (42) durchgreift.

7. Haltevorrichtung (14) nach einem oder mehreren der vorstehenden Ansprüche, **dadurch gekennzeichnet, dass** die Schiebesitzaufnahme (28) schwalbenschwanzförmig ausgebildet ist.

8. Haltevorrichtung (14) nach einem oder mehreren der vorstehenden Ansprüche, **dadurch gekennzeichnet, dass** der Sauggreifer (12) an den sauggreiferseitigen Teil (18) der Haltevorrichtung (14) oder das sonstige Schnittstellenorgan an den schnittstellenorganseitigen Teil der Haltevorrichtung (14) angespritzt ist oder auf den sauggreiferseitigen Teil (18) der Haltevorrichtung (14) oder auf den schnittstellenorganseitigen Teil der Haltevorrichtung (14) aufgeklipst ist oder mit dem sauggreiferseitigen Teil (18) der Haltevorrichtung (14) oder mit dem schnittstellenorganseitigen Teil der Haltevorrichtung (14) verschraubt ist.

9. Haltevorrichtung (14) nach einem oder mehreren der vorstehenden Ansprüche, **dadurch gekennzeichnet, dass** der saugreiferseitige Teil (18) der Haltevorrichtung (14) oder der schnittstellenorganseitige Teil der Haltevorrichtung (14) aus dem Gleitschuh (34) und aus einem hiervon in Richtung auf den Sauggreifer (12) vorstehenden Ansatz (36) gebildet ist.

10. Haltevorrichtung (14) nach einem oder mehreren der vorstehenden Ansprüche, **dadurch gekennzeichnet, dass** der Gleitschuh (34) und der basisseitige Teil (16) der Haltevorrichtung (14) eine jeweilige vorzugsweise in der ersten Richtung (20) erstreckte Strömungsöffnung (46, 44) zur Strömungs- und Unterdruckkommunikation mit der Unterdruckhandhabungseinrichtung aufweisen.

11. Haltevorrichtung (14) nach einem oder mehreren der vorstehenden Ansprüche, **dadurch gekennzeichnet, dass** der basisseitige Teil (16) der Haltevorrichtung (14) eine schnappende, rastende oder in sonstiger Weise hintergreifende Verriegelungsvorrichtung (50) aufweist, mittels derer der Gleitschuh (34) in seiner bestimmungsgemäßen Montageposition in der Schiebesitzaufnahme (28) gesichert werden kann.

12. Haltevorrichtung (14) nach Anspruch 11, **dadurch gekennzeichnet, dass** die Verriegelungsvorrichtung (50) einen in eine Verriegelungsposition federvorgespannten manuell betätigbaren Stößel (52) aufweist.

13. Haltevorrichtung (14) nach Anspruch 11 oder 12, **dadurch gekennzeichnet, dass** die Verriegelungsvorrichtung (50) einen zwischen einer Freigabeposition und einer Verriegelungsposition bewegbaren, vorzugsweise kugelförmigen Sperrkörper (56) aufweist.

14. Haltevorrichtung (14) nach Anspruch 11, 12 oder 13, **dadurch gekennzeichnet, dass** der Sperrkörper (56) in der ersten Richtung (20) in die Schiebesitzaufnahme (28) eingreifen kann.

15. Haltevorrichtung (14) nach einem oder mehreren der Ansprüche 11-14, **dadurch gekennzeichnet, dass** der federvorgespannte manuell betätigbare Stößel (52) vorzugsweise parallel zu der Schiebeebene (32) stellbar ist und dabei mit seinem Außenumfang auf eine Position des Sperrkörpers (56) einwirkt oder diese vorgibt oder begrenzt.

16. Haltevorrichtung (14) nach einem oder mehreren der Ansprüche 11-15, **dadurch gekennzeichnet, dass** die Verriegelungsvorrichtung (50) ausgebildet ist, indem ein Gehäusekörper (24) des basisseitigen Teils (16) der Haltevorrichtung (14) eine durch einen Einsatz einseitig verschlossene Durchgangsöffnung (58) oder eine Sacklochöffnung aufweist, in die ein Federelement (54) und ein Stößel (52) eingesetzt sind, wobei der Stößel nach außerhalb des Gehäusekörpers (24) vorragt und dort manuell betätigbar ist und wobei der Stößel (52) selbst oder ein durch den Stößel betätigbarer Verriegelungskörper (56) in die Schiebesitzaufnahme (28) einrückbar ist, um den Gleitschuh (34) in seiner bestimmungsgemäßen Montageposition in der Schiebesitzaufnahme (28) zu sichern.

17. Haltevorrichtung (14) nach einem oder mehreren der vorstehenden Ansprüche, **dadurch gekennzeichnet, dass** der basisseitige Teil (16) der Haltevorrichtung (14) einen Gehäuseteil (24) mit einem unterdruckkommunizierenden Anschluss an die Basis (13) der Unterdruckhandhabungseinrichtung aufweist.

18. Unterdruckhandhabungseinrichtung (2) mit einer Basis (13) und mit einem an der Basis (13) lösbar anbringbaren Sauggreifer (12) zum Ansaugen eines Gegenstands an der Unterdruckhandhabungseinrichtung, **gekennzeichnet durch** eine Haltevorrichtung (14) für den Sauggreifer (12) oder für ein sonstiges Schnittstellenorgan nach einem oder mehreren der vorstehenden Ansprüche.

19. Unterdruckhandhabungseinrichtung nach Anspruch 18, **dadurch gekennzeichnet, dass** eine Strömungskommunikation zwischen dem Saugreifer (12) und der Unterdruckhandhabungseinrichtung durch die Haltevorrichtung (14) hindurch ausgebildet ist.

20. Unterdruckhandhabungseinrichtung nach Anspruch 18 oder 19, weiter **gekennzeichnet durch** ein zusätzliches Schnittstellenorgan, insbesondere einen Federstößel, Taster oder Sensor, der einen Gleitschuh aufweist, der entsprechend dem Gleitschuh (34) des Sauggreifers (12) ausgebildet ist, so dass sich das zusätzliche Schnittstellenorgan, in der Schiebesitzaufnahme (28) des basisseitigen Teils (16) der Haltevorrichtung (14) für den Sauggreifer (12) oder in einer weiteren mit dem Gleitschuh korrespondierenden Schiebesitzaufnahme montieren lässt.

## Claims

1. A holding device (14) for a suction gripper (12) or for another interface element on a base (13) of a vacuum handling apparatus (2),
wherein the holding device (14) is designed for attaching the suction gripper (12) or another interface element to the base (13) in a releasable manner, preferably without tools, and has a first direction (20) and a second direction (22) orthogonal thereto, wherein the holding device (14) comprises a base-mounted part (16) and a suction gripper-mounted part (18) or an interface element-mounted part,
wherein the base-mounted part (16) comprises a sliding seat receptacle (28) for the suction gripper-mounted part (18) or the interface element-mounted part, wherein a sliding plane (32) and a sliding direction (30) are defined,
wherein the suction gripper-mounted part (18) or the interface element-mounted part comprises a preferably plate-shaped glide shoe (34) which is arrangeable in the sliding plane (32) of the sliding seat receptacle (28), said glide shoe being linearly slideable in the sliding direction (30) and in a positive rear engagement position with the sliding seat receptacle (28) into its intended installation position on the base-mounted part (16), wherein the sliding direction (30) of the sliding seat receptacle (28) extends in the second direction (22),
wherein the sliding seat receptacle (28) has regions (38) which enclose and engage positively behind the glide shoe (34) and which additionally delimit an insertion opening (40) extending in the first direction (20), wherein
the sliding seat receptacle (28) and the insertion opening (40) and the glide shoe (34) are designed in such that the glide shoe is slideable into the sliding seat receptacle (28) in the second direction (22) and also, as an alternative thereto, is insertable into the sliding seat receptacle (28) in the first direction (20) through the insertion opening (40), and then can be rotated about the first direction (30) into the position of rear engagement and intended installation position in the sliding seat receptacle (28).

2. The holding device (14) according to claim 1, **characterized in that** the glide shoe (34) is plate-shaped.

3. The holding device (14) according to claim 1 or 2, **characterized in that** the glide shoe (34), when viewed from above in the first direction, has a polygonal, and particularly square, rectangular, hexagonal form.

4. The holding device (14) according to claim 1, 2, or 3, **characterized in that** the glide shoe (34) has, in the sliding plane (22), a first dimension (A1) and a second dimension (A2) which is oblique to the first dimension (A1), which are different from each other.

5. The holding device (14) according to one or more of the preceding claims, **characterized in that** the first dimension (A1) of the glide shoe (34) is greater than the second dimension (A2), and **in that** the glide shoe linearly slideable in the sliding direction (30), orthogonally to its second dimension (A2), into the sliding seat receptacle (28) and into its intended installation position.

6. The holding device (14) according to one or more of the preceding claims, **characterized in that** at least one, and preferably two, cutouts (42) which are opposite each other and open towards the edge is/are formed in the regions (38) which positively engage behind the glide shoe (34), and extend(s) in the sliding plane (32), and are continuous in the first direction (20) through the respective rear-engaging region (38), and delimit and define the insertion opening (40) such that the glide shoe is positionable and orientable outside the sliding seat receptacle (28) such that from there, with the greater (A1) of its two dimensions (A1, A2), said glide shoe passes through the cutout (42) when inserted through the insertion opening (40).

7. The holding device (14) according to one or more of the preceding claims, **characterized in that** the sliding seat receptacle (28) is designed with a dovetail shape.

8. The holding device (14) according to one or more of the preceding claims, **characterized in that** the suction gripper (12) is molded onto the suction gripper-mounted part (18) of the holding device (14) or onto the other interface element on the interface element-mounted part, or is clipped onto the suction gripper-mounted part (18) of the holding device (14) or onto the interface element-mounted part of the holding device (14), or is screwed to the suction gripper-mounted part (18) of the holding device (14) or to the interface element-mounted part of the holding device (14).

9. The holding device (14) according to one or more of the preceding claims, **characterized in that** the suction gripper-mounted part (18) of the holding device (14) or the interface element-mounted part of the holding device (14) is formed by the glide shoe (34) and a projection (36) which protrudes therefrom in the direction of the suction gripper (12).

10. The holding device (14) according to one or more of the preceding claims, **characterized in that** the glide shoe (34) and the base-mounted part (16) of the holding device (14) each have a flow opening (46, 44) extending in the first direction (20) for flow communication and vacuum communication with the vacuum handling apparatus.

11. The holding device (14) according to one or more of the preceding claims, **characterized in that** the base-mounted part (16) of the holding device (14) has a locking device (50) which clicks, latches, or otherwise engages from behind, by means of which the glide shoe (34) is securable in its intended installation position in the sliding seat receptacle (28).

12. The holding device (14) according to claim 11, **characterized in that** the locking device (50) has a manually actuatable slide (52) which is spring-loaded into a locking position.

13. The holding device (14) according to claim 11 or 12, **characterized in that** the locking device (50) has a preferably spherical blocking body which is moveable between a release position and a locking position.

14. The holding device (14) according to claim 11, 12, or 13, **characterized in that** the blocking body (56) is able to engage the sliding seat receptacle (28) in the first direction (20).

15. The holding device (14) according to one or more of claims 11 - 14, **characterized in that** the spring loaded, manually actuatable slide (52) is adjustable, preferably parallel to the sliding plane (32), and the outer circumference thereof acts on a position of the blocking body (56) or specifies or limits this position.

16. The holding device (14) according to one or more of claims 11 - 15, **characterized in that** the locking device (50) is formed by a housing body (24) of the base-mounted part (16) of the holding device (14) having a through-opening (58) closed on one side by an insert or a blind hole opening into which a spring element (54) and a slide (52) are inserted, wherein the slide protrudes to the outside of the housing body (24) and is manually actuatable there, and wherein the slide (52) itself or a locking body (56) which is actuatable by the slide is insertable into the sliding seat receptacle (28) in order to secure the glide shoe (34) in its intended installation position in the sliding seat receptacle (28).

17. The holding device (14) according to one or more of the preceding claims, **characterized in that** the base-mounted part (16) of the holding device (14) has a housing part (24) with a vacuum-communicating connection to the base (13) of the vacuum handling apparatus.

18. A vacuum handling apparatus (2) comprising a base (13) and comprising a suction gripper (12) which is releasably attachable to the base (13) for suctioning an object onto the vacuum handling apparatus, **characterized by** a holding device (14) for the suction gripper (12) or for another interface element according to one or more of the preceding claims.

19. The vacuum handling apparatus according to claim 18, **characterized in that** a flow communication is formed through the holding device (14) between the suction gripper (12) and the vacuum handling apparatus.

20. The vacuum handling device according to claim 18 or 19, further **characterized by** an additional interface element, in particular a spring plunger, button, or sensor, which has a glide shoe designed to correspond to the glide shoe (34) of the suction gripper (12), such that the additional interface element is installable in the sliding seat receptacle (28) of the base-mounted part (16) of the holding device (14) for the suction gripper (12) or in a further sliding seat receptacle corresponding to the glide shoe.

## Revendications

1. Dispositif de maintien (14) pour une pince aspirante (12) ou pour un autre organe d'interface sur une base (13) d'un dispositif de manipulation sous vide (2), dans lequel le dispositif de maintien (14) est réalisé pour appliquer de manière détachable et de préférence sans outil la pince aspirante (12) ou l'autre organe d'interface sur la base (13) et présente une première direction (20) et une deuxième direction (22) perpendiculaire à celle-ci,
dans lequel le dispositif de maintien (14) comprend une partie côté base (16) et une partie côté pince aspirante (18) ou une partie côté organe d'interface, dans lequel la partie côté base (16) comprend un logement de siège coulissant (28) pour la partie côté pince aspirante (18) ou la partie côté organe d'interface, dans lequel un plan de coulissement (32) et une direction de coulissement (30) sont définis,
dans lequel la partie côté pince aspirante (18) ou la partie côté organe d'interface comprend un patin (34), de préférence en forme de plaque, pouvant être disposé dans le plan de coulissement (32) du logement de siège coulissant (28), qui peut être poussé linéairement dans la direction de coulissement (30) et dans une position de placage sur l'arrière par coopération de formes avec le logement de siège coulissant (28) sur la partie côté base (16) dans sa position de montage conforme à l'usage prévu, dans lequel la direction de coulissement (30) du logement de siège coulissant (28) s'étend dans la deuxième direction (22),
dans lequel le logement de siège coulissant (28) présente des zones (38) entourant le patin (34) et venant se plaquer sur l'arrière de celui-ci par coopération de formes, qui délimitent en plus une ouverture d'introduction (40) étendue dans la première direction (20),
dans lequel le logement de siège coulissant (28) et l'ouverture d'introduction (40) et le patin (34) sont réalisés de telle sorte que le patin peut aussi bien être glissé dans le logement de siège coulissant (28) dans la deuxième direction (22) qu'en variante à cela inséré dans le logement de siège coulissant (28) dans la première direction (20) par l'ouverture d'introduction (40) et ensuite peut être amené en rotation autour de la première direction (20) dans la position de placage sur l'arrière et la position de montage conforme à l'usage prévu dans le logement de siège coulissant (28).

2. Dispositif de maintien (14) selon la revendication 1, **caractérisé en ce que** le patin (34) est réalisé en forme de plaque.

3. Dispositif de maintien (14) selon la revendication 1 ou 2, **caractérisé en ce que** le patin (34), vu en élévation dans la première direction, est réalisé de manière polygonale, en particulier de manière carrée, rectangulaire, hexagonale.

4. Dispositif de maintien (14) selon la revendication 1, 2 ou 3, **caractérisé en ce que** le patin (34) présente dans le plan de coulissement (22) une première dimension (A1) et une deuxième dimension (A2) en biais par rapport à la première dimension (A1), qui sont différentes l'une de l'autre.

5. Dispositif de maintien (14) selon l'une ou plusieurs des revendications précédentes, **caractérisé en ce que** la première dimension (A1) du patin (34) est plus grande que la deuxième dimension (A2) et que le patin peut être introduit linéairement dans le logement de siège coulissant (28) perpendiculairement à sa deuxième dimension (A2) dans la direction de coulissement (30) jusqu'à sa position de montage conforme à l'usage prévu.

6. Dispositif de maintien (14) selon l'une ou plusieurs des revendications précédentes, **caractérisé en ce que**, lorsque les zones (38) viennent se plaquer sur l'arrière du patin (34) par coopération de formes, au moins un et de préférence deux dégagements découpés (42) à bords ouverts opposés est ou sont réalisés, qui s'étendent dans le plan de coulissement (32) et sont réalisés de manière continue dans la première direction (20) à travers la zone de placage sur l'arrière (38) respective et délimitent et définissent l'ouverture d'introduction (40) de telle sorte que le patin peut être positionné à l'extérieur du logement de siège coulissant (28) et peut être orienté de telle sorte que, de cet endroit, avec sa plus grande (A1) des deux dimensions (A1, A2), il traverse le dégagement découpé (42) par l'ouverture d'introduction (40) lors de l'insertion.

7. Dispositif de maintien (14) selon l'une ou plusieurs des revendications précédentes, **caractérisé en ce que** le logement de siège coulissant (28) est réalisé en forme de queue d'aronde.

8. Dispositif de maintien (14) selon l'une ou plusieurs des revendications précédentes, **caractérisé en ce que** la pince aspirante (12) est moulée par injection sur la partie côté pince aspirante (18) du dispositif de maintien (14) ou l'autre organe d'interface sur la partie côté organe d'interface du dispositif de maintien (14) ou clipsée sur la partie côté pince aspirante (18) du dispositif de maintien (14) ou sur la partie côté organe d'interface du dispositif de maintien (14) ou vissée avec la partie côté pince aspirante (18) du dispositif de maintien (14) ou avec la partie côté organe d'interface du dispositif de maintien (14).

9. Dispositif de maintien (14) selon l'une ou plusieurs des revendications précédentes, **caractérisé en ce que** la partie côté pince aspirante (18) du dispositif de maintien (14) ou la partie côté organe d'interface du dispositif de maintien (14) est formée du patin (34) et d'une partie saillante (36) faisant saillie de celui-ci en direction de la pince aspirante (12) .

10. Dispositif de maintien (14) selon l'une ou plusieurs des revendications précédentes, **caractérisé en ce que** le patin (34) et la partie côté base (16) du dispositif de maintien (14) présentent une ouverture d'écoulement (46, 44) respective étendue de préférence dans la première direction (20) pour la communication d'écoulement et de vide avec le dispositif de manipulation sous vide.

11. Dispositif de maintien (14) selon l'une ou plusieurs des revendications précédentes, **caractérisé en ce que** la partie côté base (16) du dispositif de maintien (14) présente un dispositif de verrouillage (50) à déclic, à encliquetage ou venant se plaquer par l'arrière d'une autre manière, au moyen duquel le patin (34) peut être bloqué dans le logement de siège coulissant (28) dans sa position de montage conforme à l'usage prévu.

12. Dispositif de maintien (14) selon la revendication 11, **caractérisé en ce que** le dispositif de verrouillage (50) présente un poussoir (52) pouvant être actionné manuellement, précontraint par un ressort dans une position de verrouillage.

13. Dispositif de maintien (14) selon la revendication 11 ou 12, **caractérisé en ce que** le dispositif de verrouillage (50) présente un corps d'arrêt (56), de préférence sphérique, mobile entre une position de libération et une position de verrouillage.

14. Dispositif de maintien (14) selon la revendication 11, 12 ou 13, **caractérisé en ce que** le corps d'arrêt (56) peut s'engager dans le logement de siège coulissant (28) dans la première direction (20).

15. Dispositif de maintien (14) selon l'une ou plusieurs des revendications 11 à 14, **caractérisé en ce que** le poussoir (52) pouvant être actionné manuellement, précontraint par un ressort, peut être placé de préférence parallèlement au plan de coulissement (32) et, ce faisant, agit avec sa périphérie extérieure sur une position du corps d'arrêt (56) ou prédéfinit ou délimite celle-ci.

16. Dispositif de maintien (14) selon l'une ou plusieurs des revendications 11 à 15, **caractérisé en ce que** le dispositif de verrouillage (50) est réalisé du fait qu'un corps de boîtier (24) de la partie côté base (16) du dispositif de maintien (14) présente une ouverture de passage (58) fermée d'un côté par un insert ou une ouverture borgne, dans laquelle sont insérés un élément ressort (54) et un poussoir (52), dans lequel le poussoir fait saillie vers l'extérieur du corps de boîtier (24) et peut être actionné manuellement à cet endroit et dans lequel le poussoir (52) lui-même ou un corps de verrouillage (56) pouvant être actionné par le poussoir peut être entré dans le logement de siège coulissant (28), afin de bloquer le patin (34) dans le logement de siège coulissant (28) dans sa position de montage conforme à l'usage prévu.

17. Dispositif de maintien (14) selon l'une ou plusieurs des revendications précédentes, **caractérisé en ce que** la partie côté base (16) du dispositif de maintien (14) présente une partie de boîtier (24) avec un raccord communiquant avec le vide sur la base (13) du dispositif de manipulation sous vide.

18. Dispositif de manipulation sous vide (2) avec une base (13) et avec une pince aspirante (12) pouvant être appliquée de manière détachable sur la base (13) pour aspirer un objet sur le dispositif de manipulation sous vide, **caractérisé par** un dispositif de maintien (14) pour la pince aspirante (12) ou pour un autre organe d'interface selon l'une ou plusieurs des revendications précédentes.

19. Dispositif de manipulation sous vide selon la revendication 18, **caractérisé en ce qu'**une communication d'écoulement entre la pince aspirante (12) et le dispositif de manipulation sous vide est réalisée à travers le dispositif de maintien (14).

20. Dispositif de manipulation sous vide selon la revendication 18 ou 19, **caractérisé en outre par** un organe d'interface additionnel, en particulier un poussoir à ressort, bouton-poussoir ou capteur, qui présente un patin qui est réalisé de manière correspondante au patin (34) de la pince aspirante (12), de sorte que l'organe d'interface additionnel peut être monté dans le logement de siège coulissant (28) de la partie côté base (16) du dispositif de maintien (14) pour la pince aspirante (12) ou dans un autre logement de siège coulissant correspondant au patin coulissant.
